# EUROPÄISCHE PATENTSCHRIFT

(11) **EP 1 919 164 B1**
(45) Veröffentlichungstag und Bekanntmachung des Hinweises auf die Patenterteilung: **25.05.2011**
(21) Anmeldenummer: 07015866.2
(22) Anmeldetag: 13.08.2007
(51) Int. Cl.: H04L 29/08

(54) **Verfahren zum Sammeln von Daten in einem anfragenden Fahrzeug von anderen Fahrzeugen in einem Netzwerk**
Method for collecting data in a requestor vehicle from other vehicles in a network
Procédé de collecte de données dans un véhicule demandeur à partir d'autres véhicules dans un réseau

(30) Priorität: 25.09.2006 DE 102006045142
(43) Veröffentlichungstag der Anmeldung: 07.05.2008
(73) Patentinhaber: Volkswagen Aktiengesellschaft, 38436 Wolfsburg (DE)
(72) Erfinder: Caliskan, Murat, 38440 Wolfsburg (DE)

(56) Entgegenhaltungen:
- EP-A- 1 394 993
- US-A1- 2004 230 345
- US-A1- 2005 003 844
- BEONGKU AN ET AL: "A mobility-based clustering approach to support mobility management and multicast routing in mobile ad-hoc wireless networks" INTERNATIONAL JOURNAL OF NETWORK MANAGEMENT, WILEY, GB, Dezember 2001 (2001-12), Seiten 387-395, XP002333507 ISSN: 1055-7148

## Beschreibung

Die vorliegende Erfindung betrifft ein Verfahren zum Sammeln von Daten in einem anfragenden Fahrzeug von anderen Fahrzeugen in einem Netzwerk, welches Kommunikationseinrichtungen der Fahrzeuge miteinander verbindet.

Bekannte Verfahren, bei denen ein Fahrzeug mit seiner Außenwelt vernetzt wird, basieren auf zentralen Ansätzen. Die Kommunikation zwischen den Fahrzeugen und die Kommunikation eines Fahrzeugs mit seiner Umwelt wird in diesem Fall über ein Infrastrukturnetzwerk am Fahrbahnrand ermöglicht. Z.B. werden bei herkömmlichen Verkehrsinformationssystemen Informationen über Sensoren gesammelt, die am Fahrbahnrand installiert sind, diese Informationen werden in einer zentralen Einrichtung ausgewertet und über einen bestimmten Radiokanal (z.B. in Europa über den sog. Traffic Message Channel; TMC) zurück an die Fahrzeuge verteilt. Andere Anwendungen, wie Internetbrowsing, Short Message Service (SMS), E-Mail oder Navigationssysteme, die in Fahrzeugen verfügbar sind, verwenden auch zentralisierte Netzwerke, wie das GSM-Mobilfunknetz, den allgemeinen paketorientierten Funkdienst (General Packet Radio Service, GPRS), das UMTS-(Universal Mobile Telecommunication System)-Netz oder satellitengestützte Systeme, wie GPS (Global Positioning System). Da diese Anwendungen in einer zentralisierten Weise organisiert sind, können sie keine Informationen zu individuellen Anfragen liefern, die von einem Fahrzeug ausgesandt wird.

Ferner sind Verfahren bekannt, die ein fahrzeuggestütztes Ad-hoc-Netzwerk (Vehicular ad hoc Network, VANET) verwenden. Eine solche Anwendung, die den IEEE 802.11 Wireless-LAN-Standard verwendet, ist ein selbstorganisierendes Fahrzeuginformationssystem, wie es in folgender Veröffentlichung beschrieben ist: Wischhof L,; Ebner A.; Rohling H.: SOTIS - A Self Organizing Traffic Information System based on Car-to-Car Communication: Prototype Implementation in Proceedings of the 1 st International Workshop on Intelligent Transportation (WIT 2004), Hamburg, Germany, March 2004. In diesem System senden die Fahrzeuge periodisch Nachrichten an ihre unmittelbare Nachbarschaft. Jedes Fahrzeug kommuniziert die Information, die in der empfangenen Nachricht enthalten ist, mit Daten aus seiner Datenbank und erzeugt hieraus eine neue Nachricht und verteilt sie. Obwohl dieses System einen dezentralen Ansatz für das Sammeln der Information verwendet, können nur Informationen verbreitet werden, die von allgemeinem Interesse sind. Da jeder Knoten periodisch im Voraus definierte Information verbreitet und keine netzwerkweiten Führungsmöglichkeiten implementiert sind, ist es nicht möglich, individuelle personalisierte Anfragen zu erzeugen oder einen bestimmten Bereich oder ein bestimmtes Fahrzeug mit dieser Art von Anwendungen zu adressieren.

Außerdem können bekannte Anwendungen zur dezentralisierten Informationsverbreitung in einem fahrzeugbasierten Netzwerk nicht für individuelle Anfragen, welche vom Fahrer ausgehen, verwendet werden, da bekannte Mechanismen auf Rundfunknachrichten (broadcast messaging) basieren und die verbreitete Information, wie z.B. Verkehrsinformation, nur von allgemeinem Interesse ist. Die verbreiteten Daten enthalten somit keinen personalisierten Charakter.

Schließlich sind aus folgenden Druckschriften Verfahren bekannt, welche eine Kommunikation zwischen den einzelnen Fahrzeugen.zur Informationsübertragung verwenden: US 2004/0236499 A1, US 2004/0116106 A1, US 2005/0003844 A1, US 2005/0030202 A1, US 6,965,829 B2. Bei allen bekannten Verfahren ergibt sich jedoch das Problem, wie die Anfrage für bestimmte Information in einem Zielgebiet verbreitet wird und danach die Antworten wieder zurück zum anfragenden Fahrzeug gelangen.

Es ist die Aufgabe der vorliegenden Erfindung ein Verfahren der eingangs genannten Art bereitzustellen, bei dem die Verbreitung einer Anfrage eines Fahrzeugs in einem Zielgebiet verbessert wird. Das Verfahren soll es ermöglichen, dass das anfragende Fahrzeug möglichst genaue Informationen über das Zielgebiet, insbesondere von anderen Fahrzeugen, als Antwort auf eine Anfrage des Fahrzeugs erhalten kann.

Diese Aufgabe wird erfindungsgemäß durch ein Verfahren mit den Merkmalen des Anspruchs 1 gelöst. Vorteilhafte Aus- und Weiterbildungen ergeben sich aus den Unteransprüchen.

Bei dem erfindungsgemäßen Verfahren wird ein Zielgebiet bestimmt. Dieses Zielgebiet wird danach in sich überlappende Teilbereiche unterteilt und in den Teilbereichen werden virtuelle Zielpunkte definiert. Für jeden Teilbereich wird nun zumindest ein Datenpaket an ein Fahrzeug in den Teilbereich des Zielgebiets übertragen, wobei das Datenpaket eine Anfrage und die Zielpunkte des jeweiligen Teilbereichs umfasst. Anschließend werden Daten als Antwort auf das anfragende Datenpaket aus den Teilbereichen übertragen.

Da bei dem erfindungsgemäßen Verfahren das Zielgebiet in sich überlappende Teilbereiche unterteilt wird, ist selbst dann ein lnformationsverlust unwahrscheinlich, wenn das anfragende Datenpaket eines Teilbereichs verloren geht. Ferner ist es möglich, bei der Unterteilung des Zielgebiets die Granularität für die Datensammlung in dem Zielgebiet zu bestimmen. Je kleiner ein Teilbereich gewählt wird, desto feiner wird das Zielgebiet unterteilt und somit durchsucht. Ferner kann man durch die Wahl des Überlappungsgrades der einzelnen Teilbereiche bestimmen, welcher Anteil des Zielgebiets mehrfach durchsucht werden soll, d.h. wie groß die Redundanz ist. Bei dem erfindungsgemäßen Verfahren wird somit vorteilhafterweise keine feste Hierarchie für den Durchlauf des Datenpaketes durch das Zielgebiet und auch keine im Voraus bestimmte Aufteilung des Zielgebiet vorgenommen, so dass das Verfahren der Dynamik des Netzwerks gerecht werden kann. Die Güte des Sammelverfahrens kann dabei vom Fahrer des anfragenden Fahrzeugs, z. B. durch Angabe der Größe der Teilbereiche und der Anzahl der virtuellen Zielpunkte bestimmt werden.

Bevorzugt sind die Zielpunkte straßerinetzunabhängig. Das erfindungsgemäße Verfahren ist daher unabhängig von einer bestehenden Infrastruktur, wie z. B. einer Straßentopologie. Ferner können auch das Zielgebiet und die Teilbereiche straßennetzunabhängig definiert werden.

Die virtuellen Zielpunkte für jeden Teilbereich werden bei dem erfindungsgemäßen Verfahren bevorzugt in einer vorgegebenen, in dem Datenpaket enthaltenen Reihenfolge durchlaufen. Ferner werden die virtuellen Zielpunkte bevorzugt so gewählt, dass der jeweilige Teilbereich möglichst vollständig abgedeckt wird. Zum Beispiel können die virtuellen Zielpunkte jeweils auf der Peripherie der Teilbereiche liegen. Dabei sind aufeinander folgende Zielpunkte insbesondere auf gegenüberliegenden Bereichen der Peripherie angeordnet.

Gemäß einer bevorzugten Ausgestaltung des erfindungsgemäßen Verfahrens verwendet das Netzwerk Kommunikationseinrichtungen der Fahrzeuge, die ein dezentrales Netzwerk mit Ad-hoc-Kommunikation zwischen den Fahrzeugen bildet.

Bei dem dezentralen Netzwerk mit Ad-hoc-Kommunikation sendet jedes Fahrzeug aktiv Anfragen an andere Fahrzeuge, um individuelle Informationen über ein spezielles und im Voraus definiertes Zielgebiet zu erhalten. Vielfältige Anfragen, die spezielle Parameter des Senders umfassen, die den Anfragen einen personalisierten Charakter verleihen, sind bei dem erfindungsgemäßen Verfahren möglich. Die Inhalte der Anfragen können an die Fahrsituation angepasst werden. Es ist somit bei dem erfindungsgemäßen Verfahren möglich, dass jedes Fahrzeug verschiedene und unvorhersagbare Anfragen über das dezentrale Netzwerk versendet, um spezielle Informationen zu erhalten.

Anfragen, die von dem Fahrzeug oder dem Fahrer ausgelöst werden können, sind z.B. eine Suche nach einer geeigneten Werkstatt entlang einer Reiseroute, das Auffinden des Zustands des Verkehrs entlang der Reiseroute oder in einer bestimmten Straße, das Suchen nach Informationen über Straßenzustände in einem Zielgebiet, das Suchen nach Freizeitaktivitäten, die in einer Stadt angeboten werden, wie z.B. Theater, Kino, gesellschaftliche Ereignisse, Informationen über aktuelle. Ampelphasen, lokale. Warnmeidungen, Kraftstoffpreise oder das Suchen nach einem freien Parkplatz in einem Zielgebiet. Insbesondere die Suche nach einem freien Parkplatz ist eine Anwendung, die viele personalisierte. Parameter von dem Fahrer erfordert, wie z.B. die Zielstraße, eine tolerierbare Gehdistänz von dem exakten Ziel und spezielle Wünsche, wie reservierte Parkplätze für behinderte Personen oder solche mit der billigsten Parkgebühr. Somit sind das Zielgebiet, die Art der gesuchten Information und sogar die Suchparameter für die Information für jedes Fahrzeug individuell und unterschiedlich. Durch das erfindungsgemäße Verfahren kann Fahrzeit bis zum Auffinden eines Parkplatzes erheblich verkürzt, Staus vermieden und die Unfallgefahr verringert werden.

Die Frage, ob eine Parklücke in einem Parkbereich existiert oder nicht, kann erfindungsgemäß mit Hilfe der sog. Multi-hop-Fahrzeug-zu-Fahrzeug-Kommunikation verbreitet werden. Dieses auf einer Fahrzeug-zu-Fahrzeug-Kommunikation beruhende Verfahren erweitert die Funktionalität heutiger Navigationssysteme und füllt die Lücke zwischen dem Navigationssystem des Fahrzeugs und dem selbständig parkenden Fahrzeug. Es kann hierdurch Beitrag zu einem personatisierten Navigationssystem geleistet werden.

Bei der Verbreitung der Datenpakete in den Teilbereichen des Zielgebiets können zusätzlich zu den Kommunikationseinrichtungen der Fahrzeuge auch stationäre Kommunikationseinrichtungen zur Datenübertragung verwendet werden. Bei der Verbreitung der Datenpakete kann insbesondere ein drahtloses lokales Netzwerk (wireless LAN) zwischen den Fahrzeugen und zwischen stationären Einrichtungen bzw. stationären Einrichtungen und Fahrzeugen verwendet werden. Ferner kann die Datenübertragung des Datenpakets in die Teilbereiche und in den Teilbereichen mittels sogenannter Multi-hop-Kommunikation erfolgen. Unter einer Multi-hop-Kommunikation wird im Sinne der Erfidung verstanden, dass das Datenpaket über Zwischenstationen an das Ziel geleitet wird.

Empfängt ein Fahrzeug oder eine stationäre Einrichtung ein Datenpaket, leitet es dieses an ein anderes Fahrzeug oder eine weitere stationäre Einrichtung in Richtung des aktuellen virtuellen Zielpunkts weiter. Da die Zielpunktsequenz in dem Datenpaket codiert ist, können auf diese Weise die Zielpunkte nacheinander durchlaufen werden. Ferner enthält das Datenpaket vorzugsweise ein Abbruchkriterium. Bei Erfüllung dieses Abbruchkriteriums wird der aktuelle Zielpunkt geändert. Das Abbruchkriterium kann z. B. die Überschreitung einer Annäherungsschwelle für den aktuellen Zielpunkt sein. Es ist somit nicht erforderlich, dass das Datenpaket die einzelnen Zielpunkte tatsächlich erreicht. Es reicht aus, dass das Datenpaket in den Umkreis des Zielpunktes gelangt. Nachdem das Datenpaket diese Annäherungsschwelle überschritten hat, wird der nächste im Datenpaket codierte Zielpunkt der aktuelle Zielpunkt, so dass das Datenpaket weiter verbreitet werden kann. Diese Merkmale tragen wesentlich dazu bei, dass das Verfahren robust gegenüber Veränderungen des Netzwerks ist. Bei der Wahl der Zielpunkte kann man nämlich nicht im Voraus wissen, ob dieser überhaupt auf einer Straße liegt und ob bei der Ankunft des Datenpakets in der Nähe des Zielpunkts sich ein Knotenpunkt des Netzwerks an dem Zielpunkt befindet.

Gemäß einer Ausgestaltung des erfindungsgemäßen Verfahrens übermittelt ein Fahrzeug oder eine stationäre Einrichtung, welche ein Datenpaket empfangen hat, die Informationen, die zu der im Datenpaket enthaltenen Anfrage gehören, an das anfragende Fahrzeug, falls solche verfügbar sind. Hierfür ist es erforderlich, dass das anfragende Fahrzeug wieder aufgefunden wird. Hierfür kann ein sog. Unicast-Mechanismus in Verbindung mit einem Positionsdienst verwendet werden. Der Unicast-Mechanismus, insbesondere positionsbasiertes Unicast, beschreibt die Übertragung einer Nachricht von einem Sender an einen bekannten Empfänger, wie es z.B. in folgenden Veröffentlichungen angegeben ist: Mauve M; Hartenstein H; Füßler, H.; Widmer, J.; Effelsberg, W.: Positionsbasiertes Routing für die Kommunikation zwischen Fahrzeugen, it+ti (Informationstechnik und Technische Informatik 44), Oldenburg Verlag, May 2002; Lochert; C.; Hartenstein, H.; Tian, J.; Füßler, H.; Hermann, D.; Mauve, M.: A Routing Strategy for Vehicular Ad Hoc Networks in City Environments, IEEE Intelligent Vehicles Symposium (IEEE IV 2003), Columbus, Ohio, June 2003 und E.M. Belding-Royer, C.-K. Toh.: A review of current routing protocols for ad hoc mobile wireless networks, IEEE Personal Communications Magazine, pages 46-55, April 1999.

Gemäß einer anderen Ausgestaltung des erfindungsgemäßen Verfahrens werden die lnformationen, die zu der im Datenpaket enthaltenen Anfrage gehören, an das anfahrende Fahrzeug dadurch übermittelt, dass sie dem Datenpaket hinzugefügt werden und das Datenpaket als letzten Zielpunkt das anfragende Fahrzeug enthält.

Gemäß einer bevorzugten Weiterbildung des erfindungsgemäßen Verfahrens werden vor der Übertragung des Datenpakets mit der Anfrage von dem anfragenden Fahrzeug an die Vielzahl von anderen Fahrzeugen in dem Zielgebiet Informationen über das Zielgebiet durch 1-Hop-Broadcasting gewonnen. Ferner können alternativ oder zusätzlich die Informationen über das Zielgebiet durch Multi-hop-Broadcasting gewonnen werden.

Der Broadcastmechanismus verbessert die gewünschte Suche im Zielgebiet. Unter Broadcasting von Datenpaketen in einem Netzwerk wird verstanden, dass die Datenpakete in einem Rundruf von einem Punkt zu allen anderen Teilnehmern übertragen werden. Broadcastmechanismen in Fahrzeug-zu-Fahrzeug-Netzwerken können in zwei Varianten verwendet werden. Bei einer Variante wird ein Bereich mit Nachrichten durch Multi-hop-Broadcasting, d.h. unter Weitervermittlung durch Zwischenstationen, geflutet und bei der anderen Variante wird ein Sender und 1-Hop-Broadcasting verwendet. Bei dem erfindungsgemäßen Verfahren kann ein 1-Hop-Broadcastingmechanismus verwendet werden, um Vorabinformation über das Zielgebiet zu generieren. Das Arbeitsprinzip eines solchen Mechanismus kann dem in folgender Veröffentlichung beschriebenen Mechanismus ähneln: Wischhof L,; Ebner A.; Rohling H.: SOTIS - A Self Organizing Traffic Information System based on Car-to-Car Communication: Prototype Implementation, in Proceedings of the 1 st International Workshop on Intelligent Transportation (WIT 2004), Hamburg, Germany, March 2004.

Bei einem Verfahren zum Sammeln von Daten in einem Zielgebiet, bei dem Datenpakete mit einer Anfrage verbreitet werden, ergibt sich das Problem, dass einzelne Datenpakete verloren gehen können. Bei dem erfindungsgemäßen Verfahren wird diesem Problem dadurch begegnet, dass das Zielgebiet in sich überlappende Teilbereiche aufgeteilt wird. Ferner wird bevorzugt ein Datenpaket in einen Teilbereich erneut übertragen, falls das ursprüngliche Datenpaket für diesen Teilbereich verloren geht und das Datenpaket oder eine Antwort auf dieses Datenpaket nicht zum anfragenden Fahrzeug zurückgelangt. Auch diese Maßnahme macht das verwendete Verfahren unabhängig von etwaigen unvorhersehbaren Schwankungen der Netzwerkstruktur in dem Zielgebiet.

Die Erfindung wird nun anhand eines Ausführungsbeispiels mit Bezug zu den Figuren erläutert.
- Fig. 1: zeigt die Unterteilung des Zielgebiets in sich überlappende Teilbereiche und die dazugehörigen virtuellen Zielpunkte
und
Fig. 2 zeigt die Verbreitung einer Suchanfrage in einem Teilbereich des Zielgebiets.

Durch das erfindungsgemäße Verfahren können in einem anfragenden Fahrzeug eine Vielzahl von Daten gesammelt werden. Das anfragende Fahrzeug erhält diese Daten aufgrund einer individuellen Anfrage. Es handelt sich somit um eine proaktive Datensammlung und nicht um eine reaktive Datensammlung, bei der unspezifische Daten, z. B. zu Verkehrsinformationen, für die Allgemeinheit verbreitet und von einem Fahrzeug bei Bedarf verarbeitet werden. Ein Beispiel für das erfindungsgemäße Verfahren ist die Parkplatzsuche in einem Zielgebiet. Dabei verbreitet das anfragende Fahrzeug eine Anfrage zu Parkplätzen in einem Zielgebiet an andere Fahrzeuge. Diese Fahrzeuge detektieren freie Parkplätze und senden Parkplatzinformation an das anfragende Fahrzeug zurück. Die Anfrage kann jedoch auch beliebige andere Informationen betreffen.

Bei dem vorliegenden Ausführungsbeispiel erfolgt die Datenkommunikation für die Suche nach einem freien Parkplatz in einem von Kommunikationseinrichtungen der Fahrzeuge gebildeten dezentralen Netzwerk mit Ad-hoc-Kommunikation zwischen den Fahrzeugen. Ferner können auch stationäre Einrichtungen zur Datenkommunikation verwendet werden. Beispielsweise können an Ampeln oder anderen Infrastruktureinrichtungen des Straßennetzes Sende/Empfangsstationen dauerhaft installiert sein. Für die Durchführung des Verfahrens sind die Fahrzeuge so ausgerüstet, dass sie miteinander kommunizieren können, d.h. Daten drahtlos austauschen können. Für die Datenkommunikation wird beispielsweise ein wireless-LAN verwendet.

Im Folgenden werden die einzelnen Schritte des Ausführungsbeispiels des erfindungsgemäßen Verfahrens beschrieben:

Zunächst wird von einem Fahrzeug 1 ein Zielgebiet 2 festgelegt, in dem bestimmte Daten gesammelt werden sollen. Die Festlegung des Zielgebiets 2 kann auch in Verbindung mit einem Navigationssystem erfolgen. Zum Beispiel kann ein Parkplatz in der Umgebung des Ziels der Route des Navigationssystems gesucht werden. Ferner könnte nach Verkehrsstörungen auf der aktuellen Route des Navigationssystems gesucht werden.

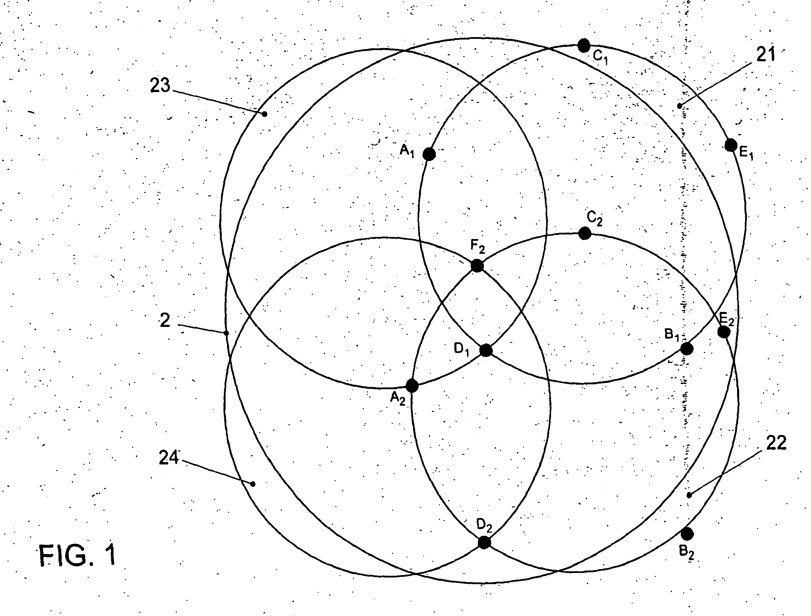

Das Zielgebiet 2 wird dann in sich überlappende Teilbereiche 21 bis 24 unterteilt. Die Anzahl bzw. die Größe der Teilbereiche kann entweder automatisch erzeugt werden, oder vom Fahrer festgelegt werden, um die Granularität der Datensuche zu beeinflussen. Ferner kann festgelegt werden, wie sich die einzelnen Teilbereiche 21 bis 24 überlappen sollen. In Fig. 1 ist ein Beispiel für eine Unterteilung des Zielgebiets 2 in die Teilbereiche 21 bis 24 gezeigt.

Danach wird für jeden der Teilbereiche 21 bis 24 festgelegt, wie ein Datenpaket mit einer Anfrage diesen Teilbereich 21 bis 24 durchlaufen soll. Hierfür werden virtuelle straßennetzunabhängige Zielpunkte A bis F definiert. Die Zielpunkte sind virtuell, da es nicht erforderlich ist, dass sie auch erreicht werden. Sie geben insbesondere die Richtung vor, in welcher das Datenpaket den jeweiligen Teilbereich 21 bis 24 durchlaufen soll.

Bei der in Fig. 1 gezeigten Unterteilung des Zielgebiets 2 sind z. B. für den Teilbereich 21 die Zielpunkte A₁, B₁, C₁, D₁ und E₁ festgelegt und für den Teilbereich 22 die Zielpunkte A₂, B₂, C₂, D₂, E₂ und F₂. Die Zielpunkte sind dabei unabhängig von der Topologie eines Straßennetzes oder anderen Einschränkungen. Sie liegen insbesondere auf der Peripherie der Teilbereiche 21 bis 24. Dabei befinden sich aufeinander folgende Zielpunkte auf gegenüberliegenden Bereichen der Peripherie des Teilbereichs 21 bis 24, um eine möglichst vollständige Abdeckung des Teilbereichs 21 bis 24 zu erreichen.

Danach werden in dem anfragenden Fahrzeug 1 für jeden Teilbereich 21 bis 24 ein Datenpaket generiert, das einerseits die Anfrage in codierter und für Einrichtungen der anderen Fahrzeuge lesbarer Form enthält und andererseits die Zielpunkte A bis F des jeweiligen Teilbereichs 21 bis 24. Diese Datenpakete werden dann von dem anfragenden Fahrzeug 1 in die jeweiligen Teilbereiche 21 bis 24 des Zielgebiets 2 übertragen. In dem Datenpaket ist als aktueller Zielpunkt, d.h. der Zielpunkt, der als nächstes angesteuert werden soll, der Zielpunkt A enthalten.

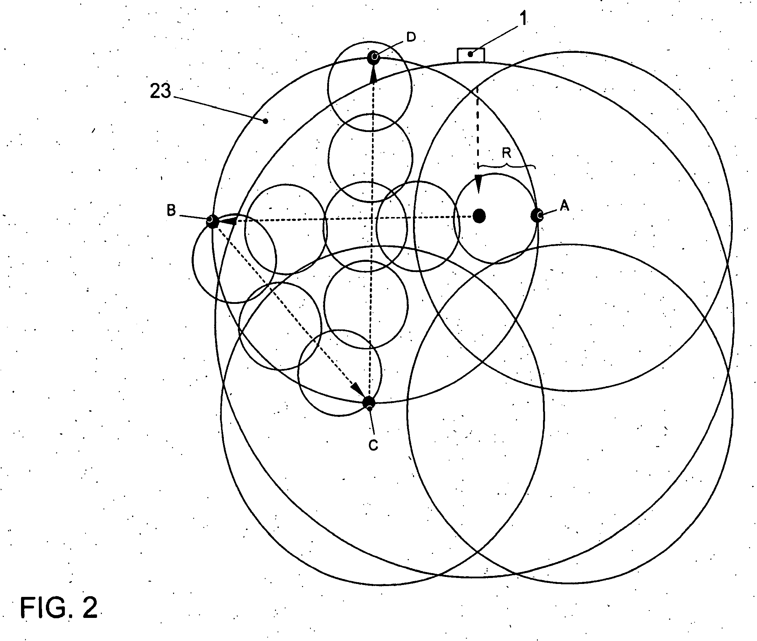

In Fig. 2 ist die Route eines von dem anfragenden Fahrzeug 1 emittierten Datenpakets in dem Teilbereich 23 gezeigt. Zunächst steuert das Datenpaket den ersten Zielpunkt A an. Das Datenpaket wird in den Netzwerk von Fahrzeug zu Fahrzeug bzw. zu einer stationären Einrichtung übertragen. Ein Fahrzeug oder eine stationäre Einrichtung, die das Datenpaket erhält, ermittelt die im Netzwerk vorhandenen Knotenpunkte für eine Weiterleitung des Datenpakets und wählt dann den Knotenpunkt aus, welcher dem aktuellen Zielpunkt am nächsten liegt. An diesem nächsten Knotenpunkt, der erneut von einem Fahrzeug oder einer stationären Einrichtung gebildet sein kann, wird das Datenpaket übertragen. Damit ein Zielpunkt nicht exakt erreicht werden muss, ist in dem Datenpaket ferner ein Abbruchkriterium codiert. Das Abbruchkriterium enthält eine Annäherungsschwelle, d.h. ein Radius, der den Zielpunkt enthält. Ist der Abstand des Datenpakets von dem aktuellen Zielpunkt geringer als diese Annährungsschwelle, gilt der Zielpunkt als erreicht. Der aktuelle Zielpunkt wird dann geändert und der nächste Zielpunkt wird angesteuert.

Wie in Fig. 2 gezeigt, nähert sich das Datenpaket dem ersten Zielpunkt A bis auf einen Abstand R an. Dieser Abstand R ist kleiner als die in dem Datenpaket codierte Annäherungsschwelle. Das Datenpaket steuert daher als nächstes den Zielpunkt B auf der gegenüberliegenden Seite des Teilbereichs 23 an. Danach wird der Zielpunkt C angesteuert und schließlich der letzte Zielpunkt D. Als letzter Zielpunkt kann optional das anfragende Fahrzeug 1 codiert sein.

Die Führung des Datenpakets zu einem Zielpunkt kann ferner mittels der folgenden zwei Routingstrategien erfolgen: Es kann eine Beacon-basierte Verteilung von von Information zugrunde gelegt werden und ein positionsbasiertes Routing, ein "Greedy forwarding mit Perimeter mode" oder ein kartenbasiertes Routing verwendet werden. Ferner kann eine Routingstrategie, die einer inhaltsbasierten Weiterverbreitung ähnelt, verwendet werden. In diesem Fall wird die nächste Station (der nächste hop) durch RTF (ready to forward)/CTF (clear to forward)-Nachrichten ermittelt.

Wenn ein wireless-LAN mit einer Reichweite von 400 m verwendet wird, ist der Radius, in dem die nächste Verbreitungsstation gesucht werden kann, 200 m. Für einen Teilbereich 21 bis 24 des Zielgebiets 2 wird in diesem Fall ein Radius von 1 km gewählt. Aus dem Quadrat des Verhältnisses des Radius des Teilbereichs,21 bis 24 zu dem Radius des wireless-LAN ergibt sich, dass ein Teilbereich 21 bis 24 weniger als 25 Stationen (hops) benötigt, um diesen Teilbereich 21 bis 24 zu durchlaufen. Bei einer Wahrscheinlichkeit von 99 %, dass die nächste Station auch erreicht wird, liegt die Wahrscheinlichkeit, dass ein Teilbereich 21 bis 24 unter diesen Bedingungen durchsucht werden kann, bei 0,99²⁵, d. h. bei 78 %. Voraussetzung hierfür ist natürlich, dass genügend Fahrzeuge oder stationäre Einrichtungen existieren, um zur Übertragungszeit des Datenpakets eine Kommunikatioriskette zu bilden.

Auf der gesamten Route des Datenpakets wird von jedem Fahrzeug oder jeder stationären Einrichtung, welche das Datenpaket empfangen hat, die in dem Datenpaket codierte Anfrage analysiert und geprüft, ob zu dieser Anfrage gehörige Informationen vorliegen. Diese Informationen können beispielsweise Verkehrsinformationen zu Staus oder freie Parkplätze in der Umgebung eines Fahrzeugs oder einer stationären Einrichtung sein. Liegen in dem Fahrzeug oder der stationären Einrichtung solche Informationen vor, gibt es verschiedene Möglichkeiten, diese Informationen an das anfragende Fahrzeug 1 zurück zu übertragen:

Einerseits können die Informationen dem Datenpaket hirizügefügt werden, so dass das Datenpaket bei der Suche in dem jeweiligen Teilbereich 21 bis 24 Informationen zu der Anfrage sammelt. In diesem Fall ist das anfragende Fahrzeug 1 als letzter Zielpunkt im Datenpaket enthalten, so dass das Datenpaket nach dem Durchlauf des Teilbereichs 21 bis 24 zurück zum anfragenden Fahrzeug 1 gelangt.

Andererseits können die Informationen auch separat von dem Datenpaket an das anfragende Fahrzeug zurück übertragen werden. Hierfür kann erneut das von den Fahrzeugen und den stationären Einrichtungen gebildete Netzwerk verwendet werden.

Stellt das anfragende Fahrzeug 1 fest, dass das Datenpaket eines Teilbereichs 21 bis 24 verloren gegangen ist, da es z. B. nicht innerhalb eines bestimmten Zeitintervalls zum anfragenden Fahrzeug 1 zurückgekehrt ist, wird das Datenpaket für diesen Teilbereich 21 bis 24 erneut in diesen Teilbereich übertragen.

In dem anfragenden Fahrzeug 1 werden die von den anderen Fahrzeugen oder den stationären Einrichtungen übertragenen Daten, die als Antwort auf das anfragende Datenpaket übertragen worden sind, gespeichert und ausgewertet. Das Ergebnis kann dem Fahrer des anfragenden Fahrzeugs dann in aufbereiteter Form grafisch dargestellt werden. Beispielsweise können in einer digitalen Karte freie Parkplätze gekennzeichnet werden, die dann mittels des Navigationssystems angesteuert werden können.

### Bezugszeichenliste

- 1: anfragendes Fahrzeug
- 2: Zielgebiet
- 21 bis 24: Teilbereiche des Zielgebiets
- A bis F: Zielpunkte

## Patentansprüche

1. Verfahren zum Sammeln von Daten in einem anfragenden Fahrzeug (1) von anderen Fahrzeugen in einem Netzwerk, welches Kommunikationseinrichtungen der Fahrzeuge miteinander verbindet, bei dem
- ein Zielgebiet (2) bestimmt wird,
- das Zielgebiet (2) in sich überlappende Teilbereiche (21 bis 24) unterteilt wird,
- in den Teilbereichen (21 bis 24) virtuelle Zielpunkte (A bis. F) definiert werden,
- für den jeden Teilbereich (21 bis 24) zumindest ein Datenpaket an ein Fahrzeug in dem Teilbereich (21 bis 24) des Zielgebiets (2) übertragen wird, wobei das Datenpaket eine Anfrage und die virtuellen Zielpunkte (A bis F) des jeweiligen Teilbereichs (21 bis 24) umfasst, und
- Daten als Antwort auf das anfragende Datenpaket aus den Teilbereichen (21 bis 24) an das aufragende Fahrzeug (1) übertragen werden.

2. Verfahren nach Anspruch 1, **dadurch gekennzeichnet, dass** die virtuellen Zielpunkte (A bis F) für jeden Teilbereich (21 bis 24) in einer vorgegebenen, in dem Datenpaket enthaltenden Reihenfolge durchlaufen werden.

3. Verfahren nach Anspruch 1 oder 2, **dadurch gekennzeichnet, dass** die virtuellen Zielpunkte (A bis F) jeweils auf der Peripherie der Teilbereiche (21 bis 24) liegen.

4. Verfahren nach einem der vorhergehenden Ansprüche, **dadurch gekennzeichnet, dass** das Netzwerk Kommunikationseinrichtungen der Fahrzeuge verwendet, die ein dezentrales Netzwerk mit Ad-hoc-Kommunikation zwischen den Fahrzeugen bildet.

5. Verfahren nach einem der vorhergehenden Ansprüche, **dadurch gekennzeichnet, dass** das Netzwerk ferner stationäre Kommunikationseinrichtungen zur Datenübertragung verwendet.

6. Verwahren nach einem der vorhergehenden Ansprüche, **dadurch gekennzeichnet, dass** ein Fahrzeug oder eine stationäre Einrichtung, welches ein Datenpaket empfangen hat, dieses an ein weiteres Fahrzeug oder eine weitere stationäre Einrichtung in Richtung des aktuellen virtuellen Zielpunkts (A bis F) weiterleitet.

7. Verfahren nach einem der vorhergehenden Ansprüche, **dadurch gekennzeichnet, dass** das Datenpaket ein Abbruchkriterium enthält und dass bei Erfüllung des Abbruchkriteriums der aktuelle Zielpunkt geändert wird.

8. Verfahren nach Anspruch 7, **dadurch gekennzeichnet, dass** das Abbruchkriterium die. Überschreitung einer Annäherungsschwelle für den aktuellen Zielpunkt (A bis F) ist.

9. Verfahren nach einem der vorhergehenden Ansprüche, **dadurch gekennzeichnet, dass** ein Fahrzeug oder eine stationäre Einrichtung, welche ein Datenpaket empfangen hat, die Informationen, die zu der im Datenpaket enthaltenen Anfrage gehören, an das anfragende Fahrzeug (1) übermittelt, falls solche Informationen verfügbar sind.

10. Verfahren nach einem der Ansprüche 1 bis 9, **dadurch gekennzeichnet, dass** die Informationen, die zu der im Datenpaket enthaltenen Anfrage gehören, an das anfragende Fahrzeug (1) **dadurch** übermittelt werden, dass sie dem Datenpaket hinzugefügt werden und das Datenpaket als letzten Zielpunkt das anfragende Fahrzeug (1) enthält.

11. Verfahren nach einem der vorhergehenden Ansprüche, **dadurch gekennzeichnet, dass** erneut ein Datenpaket in einen Teilbereich (21 bis 24) übertragen wird, falls das ursprüngliche Datenpaket für diesen Teilbereich (21 bis 24) oder eine Antwort auf dieses Datenpaket nicht zum anfragenden Fahrzeug (1) zurückgelangt.

## Claims

1. Method for collecting data in a requesting vehicle (1) from other vehicles in a network which connects communication devices in the vehicles to one another, in which
- a target area (2) is determined,
- the target area (2) is subdivided into overlapping subregions (21 to 24),
- virtual destinations (A to F) are defined in the subregions (21 to 24),
- for each subregion (21 to 29), at least one data packet is transmitted to a vehicle in that subregion (21 to 24) of the target area (2), the data packet comprising a request and the virtual destinations (A to F) in the respective subregion (21 to 24), and
- data are transmitted from the subregions (21 to 24) to the requesting vehicle (1) in response to the requesting data packet.

2. Method according to Claim 1, **characterized in that** the virtual destinations (A to F) are run through for each subregion (21 to 24) in a predefined order which is contained in the data packet.

3. Method according to Claim 1 or 2, **characterized in that** the virtual destinations (A to F) are each on the periphery of the subregions (21 to 24).

4. Method according to one of the preceding claims, **characterized in that** the network uses communication devices in the vehicles, which communication devices form a decentralized network with ad-hoc communication between the vehicles.

5. Method according to one of the preceding claims, **characterized in that** the network also uses stationary communication devices to transmit data.

6. Method according to one of the preceding claims, **characterized in that** a vehicle or a stationary device which has received a data packet forwards the latter to a further vehicle or a further stationary device in the direction of the current virtual destination (A to F).

7. Method according to one of the preceding claims, **characterized in that** the data packet contains an abort criterion, and **in that** the current destination is changed when the abort criterion is satisfied.

8. Method according to Claim 7, **characterized in that** the abort criterion is the exceeding of an approach threshold for the current destination (A to F).

9. Method according to one of the preceding claims, **characterized in that** a vehicle or a stationary device which has received a data packet transmits the information belonging to the request contained in the data packet to the requesting vehicle (1) if such information is available.

10. Method according to one of Claims 1 to 9, **characterized in that** the information belonging to the request contained in the data packet is transmitted to the requesting vehicle (1) by virtue of the fact that said information is added to the data packet and the data packet contains the requesting vehicle (1) as the last destination.

11. Method according to one of the preceding claims, **characterized in that** a data packet is transmitted to a subregion (21 to 24) again if the original data packet for this subregion (21 to 24) or a response to this data packet does not return to the requesting vehicle (1).

## Revendications

1. Procédé pour collecter dans un véhicule demandeur (1) des données d'autres véhicules d'un réseau qui relie les uns aux autres des dispositifs de communication des véhicules, et dans lequel :
- un domaine cible (2) est déterminé,
- le domaine cible (2) est divisé en parties (21 à 24) qui se superposent,
- des points cibles virtuels (A à F) sont définis dans les parties (21 à 24),
- pour chaque partie (21 à 29), au moins un paquet de données est transféré à un véhicule situé dans la partie (21 à 24) du domaine cible (2), le paquet de données comprenant une demande et les points cibles virtuels (A à F) de chaque partie (21 à 24) et
- les données sont transmises des parties (21 à 24) au véhicule demandeur (1) en tant que réponses au paquet de données demandeur.

2. Procédé selon la revendication 1, **caractérisé en ce que** les points cibles virtuels (A à E) de chaque partie (21 à 24) sont traversés dans une succession prédéterminée que contient le paquet de données.

3. Procédé selon les revendications 1 ou 2, **caractérisé en ce que** les points cibles virtuels (A à F) sont tous situés à la périphérie des parties (21 à 29).

4. Procédé selon l'une des revendications précédentes, **caractérisé en ce que** le réseau utilise des dispositifs de communication des véhicules qui forment entre les véhicules un réseau décentralisé avec communication appropriée.

5. Procédé selon l'une des revendications précédentes, **caractérisé en ce que** le réseau utilise en outre des dispositifs de communication stationnaires pour la transmission des données.

6. Procédé selon l'une des revendications précédentes, **caractérisé en ce qu'**un véhicule ou un dispositif stationnaire qui a reçu un paquet de données le relaye à un autre véhicule ou à un autre dispositif stationnaire situé dans la direction du point cible virtuel (A à F) en cours.

7. Procédé selon l'une des revendications précédentes, **caractérisé en ce que** le paquet de données contient un critère d'interruption et **en ce que** le point cible en cours est modifié lorsque le critère d'interruption est satisfait.

8. Procédé selon la revendication 7, **caractérisé en ce que** le critère d'interruption est le déplacement d'un seuil d'approche du point cible (A à F) en cours.

9. Procédé selon l'une des revendications précédentes, **caractérisé en ce qu'**un véhicule ou un dispositif stationnaire qui ont reçu un paquet de données transmettent au véhicule demandeur (1) les informations qui font partie de la demande que contient le paquet de données au cas où ces informations sont disponibles.

10. Procédé selon l'une des revendications 1 à 9, **caractérisé en ce que** les informations qui font partie de la demande que contient le paquet de données sont
transmises au véhicule demandeur (1) en étant ajoutées au paquet de données, le paquet de données contenant alors comme dernier point cible le véhicule demandeur (1) .

11. Procédé selon l'une des revendications précédentes, **caractérisé en ce qu'**un paquet de données est de nouveau transmis dans une partie (21 à 24) au cas où le paquet de données initial pour cette partie (21 à 24) ou une réponse à ce paquet de données ne reviennent pas au véhicule demandeur (1).
